# EUROPEAN PATENT SPECIFICATION

(11) **EP 0 428 915 B1**
(45) Date of publication and mention of the grant of the patent: **15.02.1995**
(21) Application number: 90120887.6
(22) Date of filing: 31.10.1990
(51) Int. Cl.: C22B 34/12

(54) **Improved method for beneficiating titanium bearing material containing iron**
Verfahren zur Anreicherung von Titan in eisenenthaltenden Stoffen
Procédé de traitement de valorisation de matériaux titanifères comportant du fer

(30) Priority: 31.10.1989 US 430892
(43) Date of publication of application: 29.05.1991
(73) Proprietor: E.I. DU PONT DE NEMOURS AND COMPANY, Wilmington Delaware 19898 (US)
(72) Inventor: Reeves, James William, Wilmington, Delaware (US); Zander, Bo Harry, S-71700 Storaa (SE); Ericson, Aake Sandor, S-17140 Solna (SE)
(74) Representative: Abitz, Walter, Dr.-Ing.

(56) References cited:
- EP-A- 0 128 440
- AU-B- 51 608
- DE-C- 879 546
- FR-A- 1 159 588
- GB-A- 2 000 755
- US-A- 3 850 615
- US-A- 3 926 614
- US-A- 4 085 189
- US-A- 4 389 391

## Description

This invention relates to an improved method for beneficiating titanium bearing material containing iron.

High grade titanium bearing material containing low amounts of iron is becoming increasingly scarce and expensive. While low grade titanium bearing material containing significant amounts of iron can be used in the chloride process for making titanium dioxide pigment or metal, significant amounts of iron chloride byproduct are produced. Some byproduct iron chloride can be used as a flocculant to remove sediment in the treatment process to produce potable water. Because, however, the amount of iron chloride required for this use is limited, the production of significant amounts of iron chloride can be a waste disposal problem.

A number of different processes have been proposed to beneficiate titanium bearing material containing iron. These processes, however, appear to be deficient in one or more aspects, including, (a) being expensive or not feasible on an industrial scale or (b) producing iron chloride which has the aforementioned disposal problems.

The following information is disclose which may be of interest in the examination of this application:
US-A-3 929 463 discloses a continuous method of effecting an endothermic metallurgical reduction reaction in the reactor space of a rotatable mechanical kiln which functions as a reaction vessel. During the reaction, the charged kiln is rotated at a speed which is lower than the speed at which the charge closest to the kiln ceases to move relative to the wall. The charge is thereby disintegrated and heated to effect the reaction. The reaction carried out can be the reduction of iron, copper, nickel or zinc oxides or sulfides. It is also disclosed that the process can be used to reduce the iron content in titaniferous magnetite and ilmenite in the form of magnetic power which then can be separated magnetically.

GB-B-1 387 200 discloses a process for producing metallic iron from materials containing iron oxides and a nonferrous metal oxide. In the process, the oxide containing material is heated in a furnace in the presence of hydrogen chloride, a flux, and a solid carbonaceous material, to a temperature below that at which a slag is formed.

GB-A-2 000 755 states that particles containing a mixture of iron and titanium oxide can be heated in a nonoxidizing environment with an iron salt or a precursor thereof to segregate the iron from the titanium bearing component. The process may be applied to beneficiation of ilmenite by first reducing the iron component thereof to metallic iron. The segregated iron can then be separated from the titanium bearing component by physical or chemical means.

An article entitled "Kinetics of Reduction of Ilmenite with Graphite at 1000 to 1100 degrees C." by S. K. Gupta, V. Rajukumar, and P. Grieveson, appears in the December 1987 issue of Metallurgical Transactions and discloses an experimental process for reducing ilmenite with graphite. It is stated by the authors that the rate is increased significantly by the addition of ferric chloride, which promotes the nucleation of iron.

An article entitled "Reduction of Ilmentite with Carbon", by D. K. Gupta, V. Rajakumar, and P. Grieveson, appearing in the June, 1988 issue of Metallurgical Transactions, discloses an experimental process for the reduction of ilemenite ore with coal in the presence of ferric chloride. According to the authors, the ferric chloride promoted the nucleation of iron and increased the rate of reduction.

In accordance with this invention there is provided:
Process for beneficiating particulate titanium bearing material containing iron oxides comprising:
(a) subjecting said particulate material to reducing conditions in the presence of a particulate carbonaceous material to convert 20-90 percent of the iron oxide to metallic iron,
(b) feeding the products resulting from step (a) to a mechanical reduction kiln and contacting the products with solid hydrated ferrous chloride under reducing conditions which cause additional iron oxide to be converted to metallic iron and the solid hydrated ferrous chloride to vaporize, wherein (i) the weight ratio of solid hydrated ferrous chloride to nonreduced iron in the product being fed is 0.01-0.5, and (ii) the weight ratio of water to ferrous chloride in the solid hydrated ferrous chloride is 0.03-1.0,
(c) removing the products resulting from step (b) from the kiln,
(d) contacting the gaseous product from step (c) with water under conditions which form solid hydrated ferrous chloride, and recycling the solid hydrated ferrous chloride to the kiln, and
(e) separating the metallic iron and titanium bearing material from the solid product from step (c).

It has been found that the process of this invention is advantageous because rather than producing iron chloride which can be a disposal problem, it produces high purity metallic iron which can be sold to make various iron products or steel. Also, compared to prior art processes, the process of this invention appears to be able to remove more iron oxides from the titanium bearing materials.

Other advantages of the process of this invention invlude:
- There is minimal loss of TiO2,
- The beneficiation reaction in the mechanical kiln can take place at low temperatures which reduces energy requirements,
- Very fine particulate metallic iron and TiO2 can be produced by the process,
- Prereduction (step(a) of the process) reduces the overall time for carrying out the process and appears to enhance the amount of conversion to metallic iron, and
- The process can be successfully operated with titaniferrous materials having a wide range of impurities.

### Titanium Bearing Material:

Any suitable titanium bearing material containing iron oxides can be used for the process of this invention. Examples include ilmenite, anatase, and titaniferous slags.

### Step (a):

In this step of the invention, particulate titanium bearing material containing iron oxides is subjected to reducing conditions in the presence of particulate carbonaceous material to convert 20-90 percent of the iron oxide to metallic iron.

Any suitable reduction conditions can be used. Generally, this will require heating the titanium bearing material in the presence of a solid carbonaceous material until the desired reduction takes place.

The reduction can take place in a rotary kiln, a fixed kiln, a fluidized bed, or any suitable vessel. Preferably, a rotary kiln should be used.

The heating should be sufficient to carry out the desired reduction and will depend on the type of carbonaceous material and titanium bearing material being used. Generally, the heating will be in the range of 900 to 1100 degrees C and more preferably 950-1050°C. Also, generally, sufficient air or oxygen will be excluded to ensure reducing conditions.

Suitable carbonaceous materials include coke, coal, charcoal, lignite, and lignite char. Preferred are lignite char and coke. Especially preferred is lignite char. The carbonaceous materials should be in particulate form. Preferably, the carbonaceous material will have an average particle size of less than 200 »m (microns), preferably less than 100 »m (microns), and most preferably less than about 50 »m (microns).

Preferably, at least a stoiciometric amount of carbonaceous material will be used, although a 5-30 percent excess can be used if desired to ensure optimum metalization in steps (a) and (b).

The reduction conditions should be sufficient to convert 40-90 percent, preferably 50-70 percent, and most preferably 60-65 percent of the iron oxide to metallic iron.

### Step (b):

This step of the invention comprises feeding the products resulting from step (a) to a mechanical reduction kiln and contacting the products with solid hydrated ferrous chloride under reducing conditions which cause additional iron oxide to be converted to metallic iron and the solid hydrated ferrous chloride to vaporize.

A suitable mechanical reduction kiln, and its method of operation, is described in US-A-3 929 463. In principle, the mechanical kiln is a large media mill which is provided with a refractory lining. The mechanical work inside the kiln (e.g. grinding, attrition, friction, etc.) generates a controlled amount of inert heat for the reaction. The use of the mechanical kiln overcomes the problems involved in heat treating large amounts of ore and char with FeCl₂ without major dilution of the reducing and chlorinating gases.

Thus, in operation, heat is generated by the rotation of the vessel, while the charge is ground to a fine powder, which increases the rate of reaction. The temperature inside the kiln can be controlled by the rotation speed. Also, if desired, additional heat can be supplied from external sources.

The temperature in this step of the invention should be high enough to vaporize the ferrous chloride but not high enough to cause substantial sintering of the titanium dioxide. Generally, the temperature utilized in this step of the invention will be 900-1100 degrees C., more preferably 950-1050 degrees C., and most preferably about 1000 degrees C.

The weight ratio of solid hydrated ferrous chloride to nonreduced iron in the titanium bearing material being fed should be 0.01-0.5, and more preferably 0.01-0.3.

The weight ratio of water to ferrous chloride in the solid hydrated ferrous chloride should be 0.03-1.0, more preferably 0.1-0.6, and most preferably 0.1-0.2.

Process optimizaton can be obtained if the hot products resulting from step (a) are promptly fed to the mechanical reduction kiln. If this is done, less mechanical heat will be required to be generated in the mechanical kiln.

### Step (c):

In this step of the process of this invention, the products resulting from step (b) are removed from the kiln and separated. It should be noted that gaseous and solid products are removed. The gaseous product is further treated in step (d), and the solid product is further treated in step (e).

### Step (d):

In this step of the process of this invention, the gaseous products from step (c) are contacted with water under conditions which form solid hydrated ferrous chloride, and the solid hydrated ferrous chloride is recycled to the kiln.

Generally, the temperature used in this step of the invention should be 140-300 degrees C., and more preferably 140-240 degrees C.

Enough water should be added in this step to form the desired amount of solid, hydrated ferrous chloride. Generally, at least about a stoiciometric amount of water will be used, because if less water is used, some ferrous chloride would be lost. Often, a slight to a moderate amount of excess of water will be used (e.g. 10-30 percent) to aid desired process kinetics and to compensate for some loss of water in the process.

### Step (e):

In this step of the process of this invention, the metallic iron and the titanium bearing material are separated from the solid product resulting from step (c).

Any suitable means can be used for the separation, including magnetic separation, settling, floatation, classification, washing, and combinations of the above.

Preferably, magnetic separation is used to separate the metallic iron from the products resulting from step (c). Then floatation can be used to separate the beneficiated titanium dioxide from the remaining reaction products such as char and ash.

### Other Process Aspects

The process of this invention can be carried out in a batch or continuous process. Preferred is a continuous process. If a continuous process is used, preferably the steps (a)-(e) are carried out simultaneously.

### EXAMPLE:

The following example illustrates this invention. Unless otherwise indicated, all percentages and parts are by weight.

An ilmenite sand with the following chemical analysis was used for this example.

| Material | Percent |
|---|---|
| Fe(total) | 32.8 |
| Fe₂O₃ | 19.3 |
| TiO₂ | 49.8 |
| MnO | 1.2 |
| Al₂O₃ | 1.0 |
| SiO₂ | 1.2 |
| CaO | 0.03 |
| MgO | 1.1 |

Before use the ore was roasted for 2 hours at 950°C to drive off volatiles. The ore was also ground so that approximately 60% had a particle size of less than 45 »m (microns).

Chemical analysis of the lignite char was as follows:

| Material | Percent |
|---|---|
| C (fixed) | 88-90% |
| S | 0.04% |
| volatiles | 3.5% |
| Ash | 7% |

Chemical analysis of ash derived from the lignite char was as follows:

| Material | Percent |
|---|---|
| SiO₂ | 5 |
| Al₂O₃ | 4 |
| CaO | 55 |
| Na₂O;K₂O | 2 |
| Fe₂O₃ | 8 |
| So₃ | 14 |
| Mgo | 12 |

The prereduction of the ore and lignite char was carried out as follows: The ore and lignite char (20% of ore by weight) were mixed together in a mixer for 10 minutes. Then, 100 grams of the mixture was charged into a nickel crucible. To prevent oxidation, the mixture was covered by two layers of cerafiber paper and a covering layer of the same reduction mix. The crucible was also covered by a tight lid. The prereduction was carried out in a 40 cm. by 40 cm. chamber furnace, at 1000°C, for 4 hours.

The beneficiation of the ore was carried out in a 17 cm. diameter by 50 cm. long mechanical kiln which was electrically heated and operated batchwise.

Prior to introducing the feed materials to the mechanical kiln, they were mixed for 10 minutes. The feed materials consisted of the following: 1000 grams of prereduced ore, 153 grams of lignite char, 52 grams of FeCl₂ 4H₂0, and 103 grams of FeCl₂. The prereduced ore had an iron metalization of about 45 percent.

The beneficiation in the mechanical kiln was carried out under the following conditions:
Temperature: 1000°C
Time, heating up: 2.5 - 3 hours
Time, beneficiation: 4 hours
Rotation speed: 30 r.p.m.
Grinding media: Not used.

The solid product output from the mechanical kiln was then ground for 30 seconds in a swinging disc mill so that 99 percent had a particle size of less than 45 »m (microns). Afterwards, separation was carried out in a Davis wet magnetic separator under the following conditions:
Beneficiated ore: 20.00 g.
Time: 20 minutes
Magnetizing current: 1.5 amp.

The results from the foregoing process are summarized below in Table 1.

**Table 1**

| Results of Beneficiation in a Mechanical Kiln Plus Magnetic Separation | | | | | | | | |
|---|---|---|---|---|---|---|---|---|
| Beneficiated Ore | | | Magnetics | | | Non-magnetics | | |
| Wt % | Fe % | TiO₂ % | Wt % | Fe % | TiO₂ % | Wt % | Fe % | TiO₂ % |
| 93.5 | 37.0 | 50.5 | 34.5 | 94.8 | 2.6 | 54.8 | 2.6 | 83.0 |

In the above Table 1, (a) the weight percent of the beneficiated ore is based on the initial weight of the non-beneficiated ore, (b) the weight percent magnetics is the weight percent of the beneficiated ore which was removed in the magnetic fraction, and (c) the weight percent non-magnetics is the weight percent of the beneficiated ore which was removed as the non-magnetic fraction.

## Claims

1. Process for beneficiating particulate titanium bearing material containing iron oxides comprising:
(a) subjecting said particulate material to reducing conditions in the presence of particulate carbonaceous material to convert 20-90 percent of the iron oxide to metallic iron,
(b) feeding the products resulting from step (a) to a mechanical reduction kiln and contacting the products with solid hydrated ferrous chloride under reducing conditions which cause additional iron oxide to be converted to metallic iron and the solid hydrated ferrous chloride to vaporize, wherein (i) the weight ratio of solid hydrated ferrous chloride to nonreduced iron in the product being fed is 0.01-0.5, and (ii) the weight ratio of water to ferrous chloride in the solid hydrated ferrous chloride is 0.03-1.0,
(c) removing the products resulting from step (b) from the kiln,
(d) contacting the gaseous products from step (c) with water under conditions which form solid hydrated ferrous chloride, and recycling the solid hydrated ferrous chloride to the kiln, and
(e) separating the metallic iron and titanium bearing material from the solid product from step (c).

2. The process of claim 1 wherein the titanium bearing material in step (a) is ilmenite and the products resulting from step (a) are promptly fed to the mechanical reduction kiln to thereby reduce the heat generation requirements for the mechanical kiln.

3. The process of claim 1 wherein step (a) is carried out in a rotary kiln.

4. The process of claim 1 wherein lignite char is used as the solid carbonaceous material in step (a).

5. The process of claim 1 wherein in step (b) the weight ratio of solid hydrated ferrous chloride to nonreduced iron in the product being fed is 0.1-0.3.

6. The process of claim 5 wherein the combined total of conversion of iron oxide to metallic iron in steps (a) and (b) is about 95 percent.

7. The process of claim 1 wherein the temperature in step (b) is 900-1100 degrees C.

8. The process of claim 1 wherein the temperature in step (d) is 140-200 degrees C.

9. The process of claim 8 wherein the water contacting in step (d) is carried out with a water spray.

10. The process of claim 1 wherein in step (a), 50-70 percent of the iron oxide is converted to metallic iron.

11. The process of claim 1 wherein:
o the titanium bearing material in step (a) is ilmenite, and
o step (a) is carried out in a rotary kiln.

12. The process of claim 1 wherein:
o the temperature in step (b) is 900-1100 degrees C,
o the temperature in step (d) is 140-240 degrees C, and
o the water contacting in step (d) is carried out with a water spray.

13. The process of claim 11 wherein in step (b) the weight ratio of solid hydrated ferrous chloride to nonreduced iron in the product being fed is 0.1-0.3.

14. The process of claim 11 wherein in step (b) the weight ratio of solid hydrated ferrous chloride to nonreduced iron in the product being fed is 0.01-0.05.

15. The process of claim 11 wherein lignite char is used as the solid carbonaceous material.

16. The process of claim 1 wherein:
o the titanium bearing material in step (a) is ilmenite,
o step (a) is carried out in a rotary kiln,
o the products resulting from step (a) are promptly fed to step (b) to thereby reduce the heat generation requirements for the mechanical reduction kiln in step (b),
o the temperature in step (b) is 900-1100 degrees C,
o the temperature in step (d) is 140-240 degrees C, and
o the water contacting in step (d) is carried out with a water spray.

17. The process of claim 16 wherein the combined total of conversion of iron oxide to metallic iron in steps (a) and (b) is about 95 percent.

18. The process of claim 16 wherein in step (a) 50-70 percent of the iron oxide is converted to metallic iron.

19. The process of claim 17 wherein in step (a) 50-70 percent of the iron oxide is converted to metallic iron.

20. The process of claim 19 wherein in step (b) the weight ratio of solid hydrated ferrous chloride to nonreduced iron in the product being fed is 0.1-0.3.

## Patentansprüche

1. Verfahren zur Anreicherung von teilchenförmigem Titanlagermaterial, das Eisenoxide enthält, umfassend:
(a) das teilchenförmige Material in Gegenwart von teilchenförmigem kohlenstoffhaltigem Material reduzierenden Bedingungen zu unterwerfen, um 20-90 Prozent des Eisenoxids in metallisches Eisen zu überführen,
(b) die aus Schritt (a) resultierenden Produkte einem mechanischen Reduktionsofen zuzuführen und die Produkte mit festem hydratisiertem Eisen(II)-chlorid in Kontakt zu bringen unter reduzierenden Bedingungen, die verursachen, daß zusätzliches Eisenoxid in metallisches Eisen überführt wird und das feste hydratisierte Eisen(II)-chlorid verdampft, worin (i) das Gewichtsverhältnis von festem hydratisiertem Eisen(II)-chlorid zu nicht reduziertem Eisen in dem Produkt, das zugeführt wird, 0,01-0,5 ist, und (ii) das Gewichtsverhältnis von Wasser zu Eisen(II)-chlorid in dem festen hydratisierten Eisen(II)-chlorid 0,03-1,0 ist,
(c) die aus Schritt (b) resultierenden Produkte aus dem Ofen zu entfernen,
(d) die gasförmigen Produkte aus Schritt (c) unter Bedingungen, die festes hydratisiertes Eisen(II)-chlorid erzeugen, mit Wasser in Kontakt zu bringen und das feste hydratisierte Eisen(II)-chlorid in den Ofen zurückzuführen, und
(e) das metallische Eisen und Titanlagermaterial aus dem festen Produkt aus Schritt (c) abzutrennen.

2. Das Verfahren nach Anspruch 1, worin das Titanlagermaterial in Schritt (a) Ilmenit ist, und die aus Schritt (a) resultierenden Produkte umgehend dem mechanischen Reduktionsofen zugeführt werden, um dadurch die Wärmeerzeugungsanforderungen für den mechanischen Ofen zu reduzieren.

3. Das Verfahren nach Anspruch 1, worin Schritt (a) in einem Drehofen ausgeführt wird.

4. Das Verfahren nach Anspruch 1, worin Braunkohlenschwelkoks als das feste kohlenstoffhaltige Material in Schritt (a) verwendet wird.

5. Das Verfahren nach Anspruch 1, worin in Schritt (b) das Gewichtsverhältnis von festem hydratisiertem Eisen(II)-chlorid zu nicht reduziertem Eisen in dem Produkt, das zugeführt wird, 0,1-0,3 ist.

6. Das Verfahren nach Anspruch 5, worin die kombinierte Umwandlungs-Gesamtsumme von Eisenoxid in metallisches Eisen in den Schritten (a) und (b) etwa 95 Prozent ist.

7. Das Verfahren nach Anspruch 1, worin die Temperatur in Schritt (b) 900-1100 Grad Celsius ist.

8. Das Verfahren nach Anspruch 1, worin die Temperatur in Schritt (d) 140-200 Grad Celsius ist.

9. Das Verfahren nach Anspruch 8, worin der Wasserkontakt in Schritt (d) mit Sprühwasser ausgeführt wird.

10. Das Verfahren nach Anspruch 1, worin in Schritt (a) 50-70 Prozent des Eisenoxids in metallisches Eisen überführt werden.

11. Das Verfahren nach Anspruch 1, worin:
o das Titanlagermaterial in Schritt (a) Ilmenit ist, und
o Schritt (a) in einem Drehofen ausgeführt wird.

12. Das Verfahren nach Anspruch 1, worin:
o die Temperatur in Schritt (b) 900-1100 Grad Celsius ist,
o die Temperatur in Schritt (d) 140-240 Grad Celsius ist, und
o der Wasserkontakt in Schritt (d) mit Sprühwasser ausgeführt wird.

13. Das Verfahren nach Anspruch 11, worin in Schritt (b) das Gewichtsverhältnis von festem hydratisiertem Eisen(II)-chlorid zu nicht reduziertem Eisen in dem Produkt, das zugeführt wird, 0,1-0,3 ist.

14. Das Verfahren nach Anspruch 11, worin in Schritt (b) das Gewichtsverhältnis von festem hydratisiertem Eisen(II)-chlorid zu nicht reduziertem Eisen in dem Produkt, das zugeführt wird, 0,01-0,05 ist.

15. Das Verfahren nach Anspruch 11, worin Braunkohlenschwelkoks als das feste kohlenstoffhaltige Material verwendet wird.

16. Das Verfahren nach Anspruch 1, worin:
o das Titanlagermaterial in Schritt (a) Ilmenit ist,
o Schritt (a) in einem Drehofen ausgeführt wird,
o die aus Schritt (a) resultierenden Produkte umgehend Schritt (b) zugeführt werden, um dadurch die Wärmeerzeugungsanforderungen für den mechanischen Reduktionsofen in Schritt (b) zu reduzieren,
o die Temperatur in Schritt (b) 900-1100 Grad Celsius ist,
o die Temperatur in Schritt (d) 140-240 Grad Celsius ist, und
o der Wasserkontakt in Schritt (d) mit Sprühwasser ausgeführt wird.

17. Das Verfahren nach Anspruch 16, worin die kombinierte Umwandlungs-Gesamtsumme von Eisenoxid in metallisches Eisen in den Schritten (a) und (b) etwa 95 Prozent ist.

18. Das Verfahren nach Anspruch 16, worin in Schritt (a) 50-70 Prozent des Eisenoxids in metallisches Eisen überführt werden.

19. Das Verfahren nach Anspruch 17, worin in Schritt (a) 50-70 Prozent des Eisenoxids in metallisches Eisen überführt werden.

20. Das Verfahren nach Anspruch 19, worin in Schritt (b) das Gewichtsverhältnis von festem hydratisiertem Eisen(II)-chlorid zu nicht reduziertem Eisen in dem Produkt, das zugeführt wird, 0,1-0,3 ist.

## Revendications

1. Un procédé de traitement de valorisation d'un matériau titanifère particulaire contenant des oxydes de fer consistant à :
(a) soumettre ledit matériau particulaire à des conditions réductrices en présence d'un matériau carboné particulaire pour convertir 20 à 90 pour cent de l'oxyde de fer en fer métallique,
(b) amener les produits résultant de la phase (a) dans un four mécanique à réduction et mettre en contact les produits avec du chlorure ferreux hydraté solide dans des conditions réductrices qui entraînent une conversion supplémentaire d'oxyde de fer en fer métallique et la vaporisation de chlorure ferreux hydraté solide, où (i) le rapport en poids du chlorure ferreux hydraté solide au fer non réduit dans le produit amené est de 0,01-0,5, et (ii) le rapport en poids de l'eau au chlorure ferreux dans le chlorure ferreux hydraté solide est de 0,03-1,0.
(c) retirer du four les produits résultant de l'étape (b) ;
(d) mettre en contact les produits gazeux de l'étape (c) avec de l'eau dans des conditions qui forment du chlorure ferreux hydraté solide, et recycler le chlorure ferreux hydraté solide dans le four, et
(e) séparer le fer métallique et le matériau titanifère du produit solide de l'étape (c).

2. Le procédé de la revendication 1 dans lequel le matériau titanifère de l'étape (a) est l'ilménite et les produits résultant de l'étape (a) sont rapidement amenés dans le four mécanique à réduction pour diminuer ainsi les besoins en génération de chaleur pour le four mécanique.

3. Le procédé de la revendication 1 dans lequel l'étape (a) est réalisée dans un four rotatif.

4. Le procédé de la revendication 1 dans lequel du charbon de lignite est utilisé comme matériau carboné solide dans l'étape (a).

5. Le procédé de la revendication 1 dans lequel, dans l'étape (b), le rapport en poids du chlorure ferreux hydraté solide au fer non réduit dans le produit amené est de 0,1-0,3.

6. Le procédé de la revendication 5 dans lequel le total combiné de conversion d'oxyde de fer en fer métallique dans les étapes (a) et (b) est d'environ 95 pour cent.

7. Le procédé de la revendication 1 dans lequel la température à l'étape (b) est de 900 à 1100° C.

8. Le procédé de la revendication 1 dans lequel la température à l'étape (d) est de 140 à 200° C.

9. Le procédé de la revendication 8 dans lequel la mise en contact avec de l'eau dans l'étape (d) est réalisée avec un pulvérisateur d'eau.

10. Le procédé de la revendication 1 dans lequel à l'étape (a), 50 à 70 pour cent de l'oxyde de fer sont convertis en fer métallique.

11. Le procédé de la revendication 1 dans lequel :
· le matériau titanifère de l'étape (a) est l'ilménite, et
· l'étape (a) est réalisée dans un four rotatif.

12. Le procédé de la revendication 1 dans lequel:
· la température de l'étape (b) est de 900 à 1100° C,
· la température à l'étape (d) est de 140 à 240° C, et
· la mise en contact avec de l'eau dans l'étape (d) est réalisée avec un pulvérisateur d'eau.

13. Le procédé de la revendication 11 dans lequel à l'étape (b) le rapport en poids du chlorure ferreux hydraté solide au fer non réduit dans le produit amené est de 0,1-0,3.

14. Le procédé de la revendication 11 dans lequel à l'étape (b) le rapport en poids du chlorure ferreux hydraté solide au fer non réduit dans le produit amené est de 0,01-0,05.

15. Le procédé de la revendication 11 dans lequel du charbon de lignite est utilisé comme matériau carboné solide.

16. Le procédé de la revendication 1 dans lequel :
· le matériau titanifère de l'étape (a) est l'ilménite,
· l'étape (a) est réalisée dans un four rotatif,
· les produits résultant de l'étape (a) sont rapidement amenés à l'étape (b) pour réduire ainsi les besoins en génération de chaleur du four mécanique à réduction de l'étape (b),
· la température de l'étape (b) est de 900 à 1100° C,
· la température à l'étape (d) est de 140 à 240° C, et
· la mise en contact avec de l'eau dans l'étape (d) est réalisée avec un pulvérisateur d'eau.

17. le procédé de la revendication 16 dans lequel le total combiné de conversion de l'oxyde de fer en fer métallique des étapes (a) et (b) est d'environ 95 pour cent.

18. Le procédé de la revendication 16 dans lequel à l'étape (a) 50 à 70 pour cent de l'oxyde de fer sont convertis en fer métallique.

19. Le procédé de la revendication 17 dans lequel à l'étape (a) 50 à 70 pour cent de l'oxyde de fer sont convertis en fer métallique.

20. Le procédé de la revendication 19 dans lequel à l'étape (b) le rapport en poids du chlorure ferreux hydraté solide au fer non réduit dans le produit amené est de 0,1-0,3.
